# NEW EUROPEAN PATENT SPECIFICATION

(11) **EP 0 358 784 B2**
(45) Date of publication and mention of the opposition decision: **31.05.1995**
(45) Mention of the grant of the patent: 17.03.1993
(21) Application number: 88114884.5
(22) Date of filing: 12.09.1988
(51) Int. Cl.: B21K 1/76, F16D 3/22

(54) **Apparatus for manufacturing a constant velocity joint**
Vorrichtung zur Herstellung eines Gleichlaufdrehgelenks
Appareil pour la fabrication d'un joint homocinétique

(43) Date of publication of application: 21.03.1990
(73) Proprietor: AIDA ENGINEERING, LTD., Sagamihara-shi, Kanagawa-ken (JP)
(72) Inventor: Ishinaga, Nobuyuki, Sagamihara-shi Kanagawa-ken (JP); Sugimoto, Kiyoshi, Sagamihara-shi Kanagawa-ken (JP); Nakano, Takashi, Tsukui-gun Kanagawa-ken (JP)
(74) Representative: Körner, Ekkehard, Dipl.-Ing.

(56) References cited:
- EP-A- 0 153 810
- WO-A-87/01061
- GB-A- 2 129 354
- JP-A- 5 224 978
- PATENT ABSTRACTS OF JAPAN, vol. 7, no. 25 (M-190)[1170], 2nd February 1983; & JP-A-57 181 737 (AIDA ENGINEERING K.K.) 09-11-1982

## Description

### Detailed Description of the Invention

The present invention relates to an apparatus for manufacturing the outer race of a constant velocity joint, as set forth in the preamble of the claim. Such apparatus is known from JP-A-57/181757.

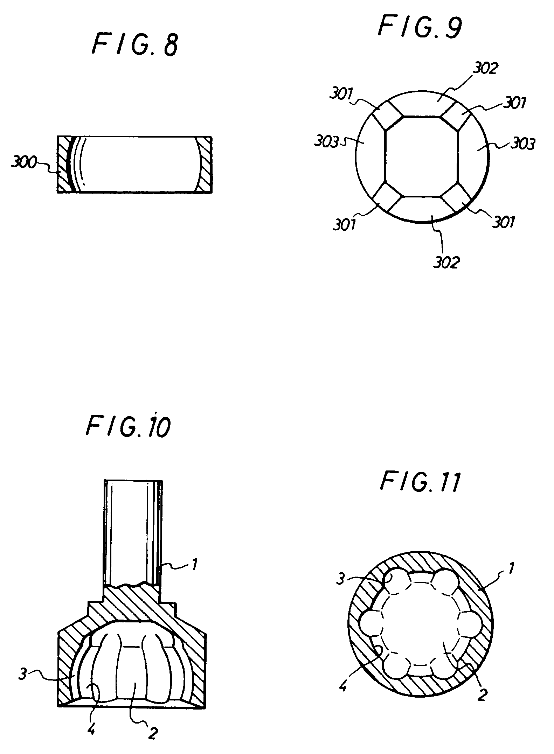

The constant velocity joint the outer race of which is to be manufactured by the apparatus of the present invention is a joint for use in a front wheel drive vehicle, and it is a joint which transmits rotation from a drive axis to a driven one at the same speed so as to cause no advance nor delay therebetween in the rotational angle. A typical constant velocity joint is illustrated in Figs. 10 and 11. In these drawings, an outer race 1 of the constant velocity joint has a hollow space 2 for housing balls, cages, etc. The hollow space 2 is ironed so that the opening is smaller in diameter than the interior. The inner wall of the hollow space 2 is formed with six ball-retaining grooves 3, and adjacent thereto, six cage-retaining portions 4.

Attempts have been made to manufacture outer races by cold forging which is good in stock utilization and effective in saving resources. In cold forging, half-finished parts whose openings are not yet ironed are supplied to dies and go through the forging process into final products.

The forging method and apparatus for manufacturing the constant velocity joints are known see e.g. JP-A-57/181757, mentioned above, and GB-A-2 129 354. Figs. 12 and 13 show a prior art die while Fig. 14 shows a workpiece supplied to a working part of a punch. The prior art die comprises a group of groove-forming punches 10 of the same number with recesses or ball-retaining grooves in the outer race, each punch 10 being disposed around a punch guide 11, as shown in Fig. 14, and portions adjacent to the ball-retaining grooves serve to retain cages.

The working part in the end of the punch 10 is mounted movable by a pivot 12. Numerals 13, 14 and 15 indicate an ironing die, an ironed workpiece, and a spring for moving the punch 10, respectively. By ironing the outer diameter of the workpiece is narrowed so as to form an undercut internal surface.

A plurality of punches 10 are disposed and grouped around the punch guide 11, and each punch has a working part for forming the ball-retaining groove. The workpiece 14, which is pre-formed as a hollow structure, comes into contact with the working parts of the group of punches set by the punch guide 11 and then ironed with use of the die 13 so as to narrow the outside diameter of the workpiece 14. After completing the ironing process, the punches 10 are moved relative to the punch guide 11 to reduce the effective diameter of the working parts, whereupon the group of punches are pulled out of the ironed workpiece 14.

The prior art, in which the removal of the punches from the ironed workpiece is done after reducing the effective diameter of the working parts, necessitates providing spaces between respective punches set in place by the punch guide. Therefore, the ironed workpiece was formed with excess metal raised portions at such positions corresponding to the spaces. After ironing, these raised portions which correspond to the cage-retaining portions were mechanically machined for finishing. Thus, the prior art was not only inefficient in manufacture but also it has a bad stock utilization.

Further, the prior art disadvantageously causes malfunction of the machine in that, for example, the aforementioned raised portions prevent the punches from returning into their reduced effective diameter position.

These disadvantages are caused by providing spaces between the punches when they are set by the punch guide, but the provision of such spaces was considered to be inevitable in order to enable the reduction of effective diameter of the punches after the forming process.

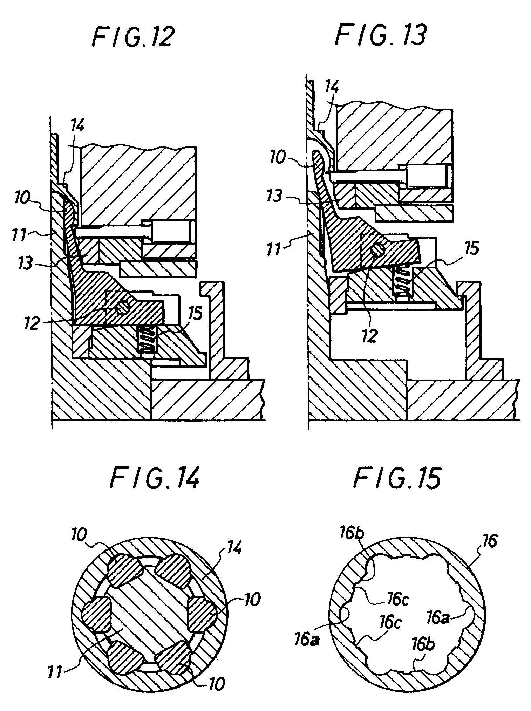

Thereafter, an attempt was made to eliminate the mechanical process subsequent to the forming process. As shown in Fig. 15, a workpiece 16 was pre-formed with escape grooves 16c at positions corresponding to cage-retaining portions 16b adjacent to ball-retaining grooves 16a. Ironing process was performed with the escape grooves being respectively located at the spaces between the diameter-reducible, grouped punches, so as to prevent the workpiece in the spaces between the punches from rising above the cage-retaining surfaces and to confine such rise within the escape grooves. This method was proposed to reduce the number of processes by eliminating the mechanical finishing process.

According to the above attempt however, it was difficult to ideally fix the width, length and depth of the escape groove serving to eliminate the mechanical process subsequent to the forming process, because a change in quantity of the raised portion is caused by a very small change in the volume of the workpiece. If the product may be left with the groove traces, then it may be grooved to the extent that will avoid the raised portions. But if the existence of such groove traces is unacceptable, it is necessary to mechanically remove the traces in the cage-retaining portions by machining after the forming process. Considering that the above proposed solution was still disadvantageous in terms of the number of working steps and stock utilization, it was not an effective improvement over the prior art.

From JP-A-57/181737 mentioned above, an apparatus for manufacturing the outer race of a constant velocity joint is known having first and second punches of unequal length resulting in unequal forces acting on the race during the forming process. Further, the punches are pivotally mounted on shafts and prevented from excessive outward tilt when not surrounded by a race to be formed by means of abutment means. The moving means jointly moving the first and second punches simultaneously and subsequently thereto the second punches only are not totally independent from each other, resulting in a negative influence on the production quality.

From GB-A-2 129 354 mentioned above, a tool for use in manufacturing of the outer race of a constant velocity joint is known, comprising first and second punch members the working parts of which together define the shape required for the internal surface of the race. Said punch members define an internal cavity into which a guiding expander fits to hold the punch members in their operative positions, and the first punch members have parallel or outwardly convergent sides which enable their inward movement between the second ones after withdrawal of the expander from the cavity. After such inward movement, the first punch members can be withdrawn from the shaped article, followed by the second punch members.

However, upon removal of the punch members from the shaped article, they are still under the influence of a biasing force produced by a spring, resulting in frictional engagement between the working parts of the punch members and the shaped article which may affect the dimensional accuracy of the shaped article.

It is the object of the present invention to provide an apparatus of the aforementioned kind of simpler structure and by which a product may be formed having no raised portions, thereby making full use of the resources-saving effect of cold forging, and simplifying the processes my minimizing the mechanical process subsequent to the forming process, and resulting in a formed product having a high inner circumferential accuracy.

This object is attained by the features of the claim.

Because of the difference in timing to reduce the diameter between the first and second punches constituting the group, the circularly arranged punches are reduced in diameter alternately half by half in order to take out the formed workpiece from the group of punches.

Therefore, a product ironed to have an opening narrower than the interior such as a constant velocity joint can be manufactured with one forging process.

Still further, according to the present invention, the working parts of the punches are reduced in diameter in two processes so that the formed product can be processed to have an opening in an extremely smaller diameter than the interior having the maximum inside diameter. As a result, it is possible to deepen grooves in which the balls are housed, and if the formed product is a constant velocity joint, to improve the performance of the joint.

In addition, the forming process is done with the punch working parts being closely assembled, and the punches will not slip out of the positions at the time of forming. Therefore, it is possible to manufacture a product having a high forming accuracy in the inside of the hollow space.

### Brief Description of the Drawings

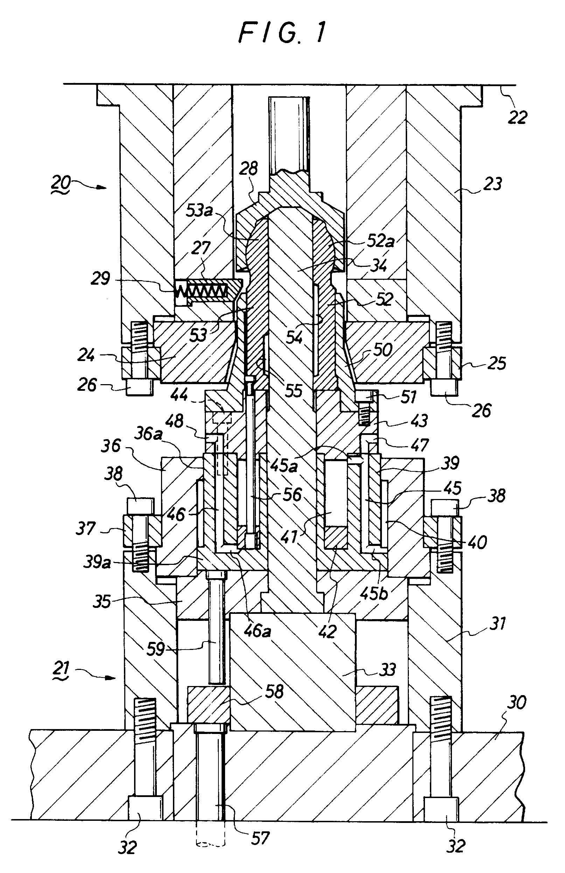

Figs. 1 to 4 show a first embodiment of the present invention;
Fig. 1 is a sectional view of a die completing a work;

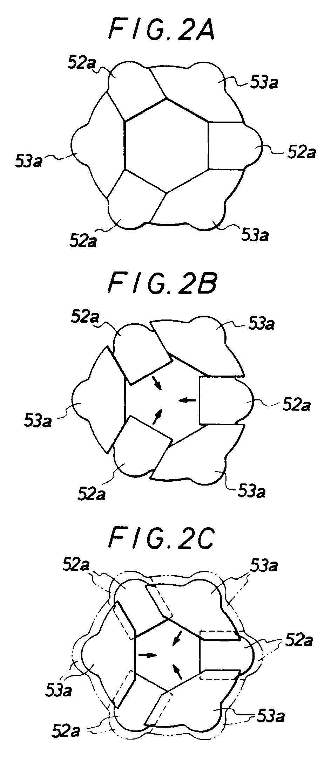

Figs. 2A, 2B and 2C are plan views of working parts of punches in the working order;

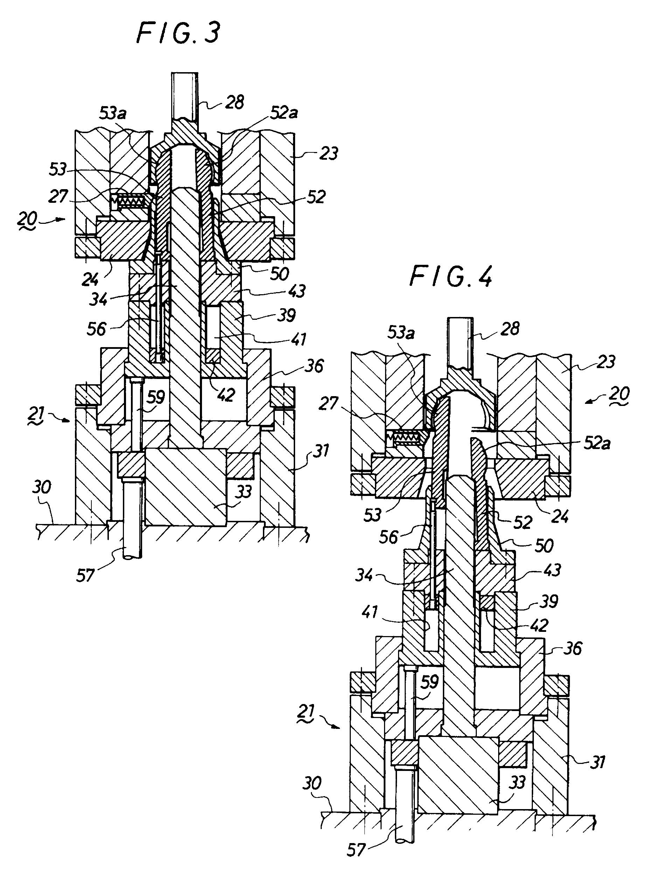

Fig. 3 is a sectional view showing a condition wherein first punches are reduced in effective diameter after completing the work;
Fig. 4 is a sectional view showing a condition wherein second punches are reduced in effective diameter after the first punches are reduced in effective diameter;

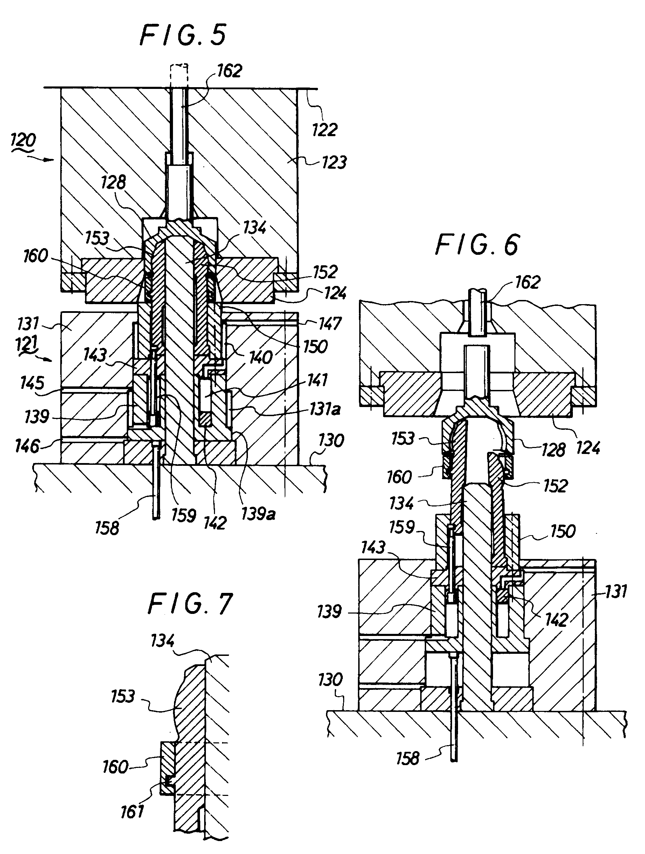

Figs. 5 to 7 show a second embodiment of the present invention;
Fig. 5 is a sectional view of a die completing a work;
Fig. 6 is a sectional view showing a condition wherein first and second punches are reduced in effective diameter after the work;
Fig. 7 is a sectional view of a support ring;
Fig. 8 is a sectional view of another example of a formed part to which the present invention is applicable;
Fig. 9 is a plan view of punches for working the formed part shown in Fig. 8;
Fig. 10 is a sectional view of a constant velocity joint to be manufactured by the present inention;
Fig. 11 is a side view thereof;
Fig. 12 is a sectional view of a prior art die completing a work while Fig. 13 is a sectional view of punches in a diameter reduced condition;
Fig. 14 is a horizontal sectional view of punches shown in Fig. 12 to which a workpiece is supplied; and
Fig. 15 is a bottom view of a prior art workpiece.

### Preferred Embodiments

Figs. 1 to 4 show a first embodiment of the present invention, Fig. 1 being a sectional view of a forming die. Reference numerals 20 and 21 indicate an upper die assembly set on a press slide, not shown, and a lower die assembly on a press bolster, not shown, respectively.

The upper die assembly 20 includes an upper die set plate 22, a cylindrical upper die holder 23 fixed to the lower surface of the die set plate 22, and an ironing die 24 fixed to the lower end of the holder 23. The ironing die 24 has its outer circumference fixed via a pressure ring 25 to the holder 23 by bolts 26. Reference numeral 27 indicates a stopper for supporting a formed part 28 set in the central opening of the holder 23, which stopper is biased by a spring 29 into the opening.

The lower die assembly 21 has a lower die set plate 30, on which a cylindrical lower die holder 31 is fixed by bolts 32. An anvil 33 is provided on the lower die set plate 30 within the lower die holder 31, and a rod-like punch guide 34 is in contact with the center of the anvil 33 and kept vertical by a pressure plate 35 which also serves to fix the anvil 33.

A lower die cylinder 36 is provided inside the upper part of the lower die holder 31, with its lower outer circumference being retained by a pressure ring 37 and with this ring, fixed to the lower die holder 31 by bolts 38. The lower end of the cylinder 36 rests on the pressure plate 35. Housed within the cylinder 36 is a cylindrical slider 39 axially slidable along the punch guide 34.

The cylindrical slider 39 has its lower end formed as a piston 39a which is in contact with the inner wall of the cylinder 36, while a small diameter portion 36a formed in the upper end of the cylinder 36 is in contact with the outer circumferential wall of the cylindrical slider 39. Any of these members are slidable with respect to one another, and this arrangement allows an air chamber 40 to be formed between the cylinder 36 and the cylindrical slider 39. Further, the cylindrical slider 39 has a ring-shaped bottomed hole 41 around its portion slidable along the punch guide 34, and a slidable ring piston 42 is housed within the hole 41. The upper part of the cylindrical slider 39 protrudes from the opening of the cylinder 36, and a punch support body 43 for closing the hole 41 is fixed by bolts 44 to the top of the cylindrical slider 39.

Further, the cylindrical slider 39 has passages 45 and 46 for pressurized fluid which are respectively communicating with inlet/outlet ports 47 and 48 formed in the side of the punch support body 43. The passage 45 has supply ports 45a and 45b, former communicating with an upper chamber defined by the top of ring piston 42 and the bottom of punch support body 43 while the latter port 45b communicating with the air chamber 40 disposed between the cylinder 36 and the cylindrical slider 39. On the other hand, the passage 46 has a supply port 46a communicating with a lower chamber defined by the bottom of ring piston 42 and the bottom of bottomed hole 41.

A punch holding tube 50 is fixed by bolts 51 onto the punch support body 43, and within the punch holding tube 50, six rod-like punches 52 and 53 are disposed along and around the punch guide 34, first three punches 52 and second three punches 53 constituting a group of punches. The cylindrical slider 39, the punch support body 43 and the punch holding tube 50 form an integral structure, and since the punches 52 and 53 are superposed on the punch support body 43, the punches move up and down slidably along the punch guide 34 as the cylindrical slider 39 goes up and down. When the cylindrical slider 39 is at its lower limit, the upper ends of the punches 52 and 53 are approximately at the same elevation with the top of the punch guide 34. When the punches 52 and 53 are at the lower limit, working parts 52a and 53a formed at the upper ends of the punches 52 and 53 are closely assembled. The shape formed by the closely assembled working parts 52a and 53a and the top of the punch guide 34 makes the shape of the recesses to be made in the outer race.

As shown in Fig. 2A, the first and second punches 52 and 53 are disposed alternately. The working parts 52a of the first punches 52 are formed respectively as a radially parallel or tapering configuration so that they can be reduced in diameter while both working parts 52a and 53a are in a closely assembled condition.

Again with reference to Fig. 1, the first and second punches 52 and 53 have axial grooves 54 and 55, respectively, each groove being formed in the punch on its side slidable with the punch guide 34. The grooves 54 in the first punches 52 are longer while the grooves 55 in the second punches 53 are shorter. These grooves 54 and 55 help the working parts to reduce the diameter. When the punches 52 and 53 move up, the longer grooves 54 reach above the top of the punch guide 54, permitting only the first punches 52 to tilt inwardly and reduce the diameter of the working parts 52a. Further, when the second punches 53 move further up and the shorter grooves 55 reach above the top of the punch guide 34, the grooves 55 allow the second punches 53 to tilt inwardly and reduce the diameter of the working parts 53a.

The ring piston 42 housed in the hole 41 of the cylindrical slider 39 is provided with a rod 56 extending through the punch support body 43, and the rod 56 is linked at its upper end with the second punches 53. The ring piston 42 is lifted after the first punches 52 reach the upper limit, and thereby the second punches 53 are moved upward via the rod 56.

Air pressure is suitable for the fluid pressure, but spring means may be used for biasing the respective members without using such fluid pressure.

The cylindrical slider 39 is in operational contact with a first knock out pin 57 extending through the lower die set plate 30, via a ring-shaped pad 58 movable around the anvil 33 and a second knock out pin 59 extending through the pressure plate 35. The upward movement of the cylindrical slider 39 is done by the operation of the second knock out pin 59.

The forming process with use of the present die will be described hereinbelow. With the first knock out pin 57 being lowered, pressurized fluid is supplied from the passage 47 into the passage 45 so as to lower the cylindrical slider 39 and the ring piston 42, whereby both first and second punches 52 and 53 reach the lower limit, when the working parts 52a and 53a are closely assembled around the top of the punch guide 34 to make a forming die. (See Fig. 2A). A workpiece is supplied so as to cover the punches 52 and 53. The opening of the workpiece is not yet ironed and has an excess metal needed to be ironed.

Fig. 1 shows a condition in which the slide reaches the bottom dead center accompanied with the upper die assembly 20, completing the forming process of the workpiece 28 to iron it to narrow the outer circumference with use of the ironing die 24. The slide starts to move upward, and accompanied therewith, the first knock out pin 57 goes up, lifting the pad 58, the second knock out pin 59 and the cylindrical slider 39, which moves up the first and second punches 52 and 53 along the punch guide 34. In this condition, no air pressure is supplied into the lower chamber defined by the bottom of ring piston 42 in the hole 41. Further, the air pressure which was supplied into the upper chamber of the hole 41 and the air chamber 40 between the cylindrical slider 39 and the cylinder 36 is discharged through the passage 47.

When the punches 52 and 53 move upward and the ends of the longer grooves 54 formed inside the first punches 52 reach the top of the punch guide 34, the working parts 52a of the first punches 52 tilt inwardly. Consequently, the diameter of these working parts 52a is smaller than that at the time of forming, and only the first punches 52 come into a removable condition from the opening of the workpiece. (See Figs. 2B and 3.)

With the upper die assembly 20 being moved further up, air pressure is supplied through the passage 48 into the passage 46 so as to lift the ring piston 42. The ring piston 42 moves up the second punches 53 via the rod 56. When the shorter grooves 55 formed inside the second punches 53 reach the top of the punch guide 34, the working parts 53a of the second punches 53 tilt inwardly and are reduced in diameter. Consequently, both first and second punches 52 and 53 come into a removable condition from the opening of the workpiece. (See Figs. 2C and 4.)

After the punches are pulled out, the stopper 27 engages with the lower end of the formed workpiece 28, supporting the same while the upper die assembly moves upward. The formed workpiece 28 will be withdrawn from the upper die assembly after it become removable from the punches 52 and 53.

Figs. 5 to 7 show a second embodiment of the present invention. Reference numerals 120 and 121 indicate upper and lower die assemblies, respectively. The upper die assembly 120 comprises an upper die set plate 122, an upper die holder 123 fixed thereto, and a die 124 fixed to the lower end of the holder 123. The lower die assembly 121 comprises a lower die set plate 130 and a cylindrical lower die holder 131 fixed thereto. A punch guide 134 is provided in the center of the lower die holder 131 and fixed to the lower die set plate 130.

Further, the lower die holder 131 is in the shape of a cylinder, in which holder a cylindrical slider 139, a punch support body 143 and a punch holding tube 150 are slidably housed while they are bolted into an integral structure. On the punch support body 143, there are a group of six punches comprising first three punches 152 and second three punches 153, disposed alternately. The cylindrical slider 139 has its lower end formed as a piston 139a, and a cylinder chamber 131a is formed between the piston 139a and the lower die holder 131. Further, the cylindrical slider 139 is formed with a ring-shaped bottomed hole 141 in which a ring piston 142 is housed.

The punch support body 143 is slidable within an air chamber 140 formed in the upper part of the lower die holder 131. The piston 139a divides the cylinder chamber 131a into upper and lower chambers. Through a passage 145, fluid pressure such as air pressure is supplied into the upper cylinder chamber 131a, while the lower cylinder chamber 131a is open to the atmosphere through a passage 146.

Reference numerals 158 and 159 indicate a first knock out pin for pushing up the cylindrical slider 139 and a second knock out pin linking the ring piston 142 to the second punches 153, respectively.

The configuration of the contact surfaces between the punches 152 and 153 is the same with that of the first embodiment. In the second embodiment, the punches 152 and 153 are fitted with a support ring 160. The support ring 160 has an inside groove in engagement with projections formed outside of the second punches 153, and is adapted to move up and down together with the punches. A workpiece 128 is always biased down-ward by a knock out rod 162.

In the second embodiment, the knock out rod 162 ejects the workpiece from the die 124 and leaves it on the punch side as the press slide moves up from the bottom dead center. The support ring 160 moves up together with the second punches 153, supporting the formed workpiece released from the punches.

With the upward movement of the first knock out pin 158 and the punch support body 143, the punches 152 and 153 move up together with the formed workpiece and the first punches 152 are reduced in diameter above the punch guide 134. Subsequently, when the fluid pressure lifts the ring-shaped piston 142, the second knock out pin 159 moves only the second punches 153 upward, which are reduced in effective diameter at their upper limit higher than the first punches 152, and in this condition, the formed workpiece is removed from the punches. (See Fig. 6).

Thereafter, the fluid pressure is supplied from a passage 147 so as to lower the ring piston 142 and at the same time the pressurized fluid is discharged from the passage 145 so as to lower the knock out pin 158, whereupon the punches 152 and 153 return to a waiting position.

Fig. 8 illustrates another example of a product ironed so as to have an opening narrower than the interior, showing an outer race of a spherical roller bearing. The present invention is also applicable to this illustrated example by matching the shape of closely assembled working parts of punches to the shape of the product. Fig. 9 shows a group of punches for forming the product of Fig.8.

A formed part 300 is the outer race of the spherical roller bearing. A group of eight divided punches consists of three kinds of punches, namely first punches 301, second punches 302 and third punches 303. The second and third punches 302 and 303 are symmetrical with respect to the axis and disposed alternatively, with the first punch 301 being interposed between the second and third punches 302 and 303.

The diameter reduction is performed by narrowing firstly the first punches 301 and then the second and third punches simultaneously.

## Claims

1. An apparatus for manufacturing the outer race of a constant velocity joint comprising:
a die (24) mounted to a first die assembly (20);
a punch guide (34) mounted to a second die assembly (21);
a group of circumferentially divided punches (52,53) mounted around said punch guide (34) for relative axial movement, each punch (52,53) having a working part (52a,53a) at the upper end thereof; said group consisting of a plurality of circumferentially spaced first punches (52) and a plurality of second punches (53) each one of the latter being disposed within the spaces between said first punches (52), said first and second punches (52,53) each being formed as a radially parallel or tapering structure in contact with the other;
escape grooves (54,55) each formed in the punch side slidable with said punch guide (34), the escape grooves (54) in said first punches (52) being longer than the escape grooves (55) in said second punches (53);
means for varying the mutual distance of the die assemblies (20,21):
first moving means (57,58,59,39) for moving said first and second punches (52,53) simultaneously with respect to said punch guide (34) in the same direction as the first die assembly (20) moves with respect to the second die assembly (21) after termination of said manufacture to bring said first punches (52) into a position in which the effective outer diameter of their working parts (52a) is reducible to disengage said first punches (52) from said outer race (28);
second moving means (46,42,56) for moving only said second punches (53) in the same direction as the first die assembly (20) moves with respect to the second die assembly (21) after termination of said manufacture after said first punches (52) have reached said diameter-reducible position to bring said second punches (53) into a position in which the effective outer diameter of their working parts (53a) is reducible to disengage said second punches (53) from said outer race (28),
characterized in that
said first and second punches (52,53) have equal length and are held in place around said punch guide (34) by a punch holding tube (50) affixed to a punch support body (43) movable by said first moving means (57,58,59,39), and that said first and second moving means are independent of each other and are operated one after the other only,
said punch support body (43) is fixedly secured to a cylindrical slider (39), said punch support body (43) and said cylindrical slider (39) are slidable along said punch guide (34), the axial movement of said cylindrical slider (39) along said punch guide (34) causing said punches (52,53) to move relative to said punch guide (34), and
said second punches (53) are linked with a rod (56) extending through the punch support body (43) and connected to a piston (42) slidably housed in a bottomed hole (41) formed in the cylindrical slider (39), said second punches (53) being movable by the operation of said piston (42) in said hole (41) after said first and second punches (52,53) have been simultaneously moved by said cylindrical slider (39), the operation of said piston (42) being effected by a pressurized fluid applied to said piston (42).

## Patentansprüche

1. Vorrichtung zur Herstellung des Außenlagers eines Gleichlaufdrehgelenks, enthaltend:
ein Gesenk (24), das in einer ersten Gesenkbaugruppe (20) befestigt ist;
eine Stempelführung (34), die in einer zweiten Gesenkbaugruppe (21) befestigt ist;
eine Gruppe im Umfang aufgeteilter Stempel (52,53), die um die Stempelführung (34), gegeneinander axial beweglich, gehalten sind, wobei jeder Stempel (52,53) einen Arbeitsabschnitt (52a,53a) an seinem oberen Ende aufweist;
die Gruppe aus mehreren im Umfang beabstandeten ersten Stempeln (52) und mehreren zweiten Stempeln (53) besteht, wobei letztere jeweils in den Zwischenräumen zwischen den ersten Stempeln (52) angeordnet sind und die ersten und zweiten Stempel (52,53) jeweils eine radial parallele oder sich radial verjüngende Gestalt aufweisen, die einander berühren;
Ausweichnuten (52,55), die jeweils in der Stempelseite ausgebildet sind, die an der Stempelführung (34) gleitet, wobei die Ausweichnuten (54) in den ersten Stempeln (52) länger als die Ausweichnuten (55) in den zweiten Stempeln (53 sind;
Einrichtungen zum Verändern des gegenseitigen Abstandes der Gesenkbaugruppen (20,21);
erste Bewegungseinrichtungen (57,58,59,39) zum Bewegen der ersten und zweiten Stempel (52,53) simultan gegenüber der Stempelführung (34) in derselben Richtung, in der sich die erste Gesenkbaugruppe (20) nach Beendigung des Herstellungsvorgangs gegenüber der zweiten Gesenkbaugruppe (21) bewegt, um die ersten Stempel (52) in eine Lage zu bringen, in der der wirksame Außendurchmesser ihrer Arbeitsabschnitte (52a) verminderbar ist, um die ersten Stempel (52) von dem Außenlager (28) zu lösen;
zweite Bewegungseinrichtungen (46,42,56) zum Bewegen nur der zweiten Stepel (53) in derselben Richtung, in der sich die erste Gesenkbaugruppe (20) nach Beendigung des Herstellungsvorgangs gegenüber der zweiten Gesenkbaugruppe (21) bewegt, nachdem die ersten Stempel (52) ihre den Durchmesser vermindernde Stellung erreicht haben, um die zweiten Stempel (53) in eine Stellung zu bringen, in der der wirksame Außendurchmesser ihrer Arbeitsabschnitte (53a) verminderbar ist, um die zweiten Stempel (53) von dem Außenlager (28) zu lösen,
**dadurch gekennzeichnet**, daß
die ersten und zweiten Stempel (52,53) gleiche Länge haben und um die Stempelführung (53) von einem Stempelhalterohr (50) gehalten sind, das an einem Stempeltragkörper (43) befestigt ist, der von den ersten Bewegungseinrichtungen (57,58,59,39) bewegt wird, und daß die ersten und zweiten Bewegungseinrichtungen voneinander unabhängig sind und nur nacheinander betätigt werden,
der Stempeltragkörper (53) fest an einem zylindrischen Gleitstück (39) angebracht ist, wobei der Stempeltragkörper (43) und das zylindrische Gleitstück (39) längs der Stempelführung (34) verschiebbar sind und die axiale Bewegung des zylindrischen Gleitstücks (39) längs der Stempelführung (34) bewirkt, daß die Stempel (52,53) sich gegenüber der Stempelführung (34) bewegen, und
die zweiten Stempel (34) mit einem Stab (56) verbunden sind, der sich durch den Stempeltragkörper (43) erstreckt und mit einem Kolben (42) verbunden ist, der in einem Sackloch (41) verschiebbar angeordnet ist, das in dem zylindrischen Gleitstück (39) ausgebildet ist, wobei die zweiten Stempel (53) durch die Betätigung des in dem Loch (41) befindlichen Kolbens (42) bewegbar sind, nachdem die ersten und zweiten Stempel (52,53) durch das zylindrische Gleitstück (39 simultan bewegt worden sind, und die Betätigung des Kolbens (42) durch ein ihm zugeführtes Druckfluid hervorgerufen wird.

## Revendications

1. Un appareil pour fabriquer la piste extérieure d'un joint homocinétique, comportant :
une matrice (24) montée sur un premier ensemble à matrice (20) ;
un guide (34) de poinçons monté sur un second ensemble à matrice (21) ;
un groupe de poinçons (52,53) répartis circonférenciellement et montés autour dudit guide (34) de poinçons pour avoir un mouvement axial relatif, chaque poinçon (52,53) comportant une partie de travail (52a, 53a) à son extrémité supérieure ; ledit groupe étant constitué d'une pluralité de premiers poinçons (52) espacés circonférenciellement et d'une seconde pluralité de seconds poinçons (53), chacun de ces derniers étant disposé dans l'espace compris entre lesdits premiers poinçons (52), lesdits premiers et seconds poinçons (52,53)étant formés chacun comme une structure radialement parallèle ou s'amincissant en contact avec l'autre ;
des gorges d'échappement (54,55), formées chacune sur la face du poinçon qui peut coulisser sur ledit guide de poinçons (34), les gorges d'échappement (54) des premiers poinçons (52) étant plus longues que les gorges d'échappement (55) des seconds poinçons (53) ;
des moyens pour faire varier la distance mutuelle des ensembles à matrice (20,21) ;
des premiers moyens de déplacement (57,58,59,39) pour déplacer simultanément lesdits premiers et seconds poinçons (52,53) par rapport audit guide de poinçons (34) dans la même direction que celle dans laquelle le premier ensemble à matrice (20) se déplace par rapport au second ensemble à matrice (21) après la fin de ladite fabrication pour amener lesdits premiers poinçons (52) dans une position pour laquelle le diamètre extérieur effectif de leurs pièces de travail (52a) peut être réduit pour dégager lesdits premiers poinçons (52) de ladite piste extérieure (28) ;
des seconds moyens de déplacement (46,42,56) pour déplacer seulement lesdits seconds poinçons (53) dans la même direction que celle dans laquelle se déplace le premier ensemble à matrice (20) par rapport au second ensemble à matrice (21) après la fin de ladite fabrication, après que lesdits premiers poinçons (52) ont atteint ladite position à diamètre réductible pour amener lesdits seconds poinçons (53) dans une position pour laquelle le diamètre extérieur effectif de leurs parties de travail (53a) peut être réduit pour dégager lesdits seconds poinçons (53) de ladite piste extérieure (28),
caractérisé en ce que
lesdits premiers et seconds poinçons (52,53) ont la même longueur et sont tenus en place autour dudit guide de poinçons (54) par un tube (50) de maintien des poinçons qui est assujetti à un corps (43) de support des poinçons pouvant être déplacé par lesdits premiers moyens de déplacement (57,58,59,39) et en ce que lesdits premiers et seconds moyens de déplacement sont indépendants l'un de l'autre et sont actionnés seulement l'un après l'autre,
ledit corps (43) de support des poinçons est assujetti fixement à un coulisseau cylindrique (39), ledit corps (43) de support des poinçons et ledit coulisseau cylindrique (39) pouvant coulisser le long dudit guide de poinçons (34), le mouvement axial dudit coulisseau cylindrique (39) le long dudit guide de poinçons (34) provoquant le déplacement relatif desdits poinçons (52,53) par rapport audit guide de poinçons (34), et
lesdits seconds poinçons (53) sont reliés par une tige (56) traversant le corps (43) de support des poinçons et reliée à un piston (53) logé de manière coulissante dans un alésage borgne (41) formé dans le coulisseau cylindrique (39), lesdits seconds poinçons (53) pouvant être déplacés par l'actionnement dudit piston (42) dans ledit alésage (41) après que lesdits premiers et seconds poinçons (52,53) ont été simultanément déplacés par ledit coulisseau cylindrique (39), l'actionnement dudit piston (42) étant effectué par un fluide sous pression appliqué audit piston (42).
